# EUROPÄISCHE PATENTSCHRIFT

(11) **EP 0 980 733 B1**
(45) Veröffentlichungstag und Bekanntmachung des Hinweises auf die Patenterteilung: **18.04.2001**
(21) Anmeldenummer: 99112858.8
(22) Anmeldetag: 03.07.1999
(51) Int. Cl.: B23D 23/00, B21F 11/00

(54) **Hammer (Werkzeugmaschine), insbesondere für Schlagscheren zum Abscheren von Draht- und/oder Stangenabschnitten**
Impact shear for wires or bars
Cisaille de frappe pour des fils ou des barres

(30) Priorität: 20.08.1998 DE 19837754
(43) Veröffentlichungstag der Anmeldung: 23.02.2000
(73) Patentinhaber: WAFIOS Aktiengesellschaft, 72764 Reutlingen/Württ. (DE)
(72) Erfinder: Gödtner, Werner, Dipl.-Ing., 72764 Reutlingen/Württ. (DE)
(74) Vertreter: Wolff, Michael, Dipl.-Phys.

(56) Entgegenhaltungen:
- EP-A- 0 260 468
- DE-A- 19 648 485

## Beschreibung

Gegenstand der Erfindung ist ein Hammer gemäß Oberbegriff von Patentanspruch 1, insbesondere für rückstoßfreie Hochgeschwindigkeits-Schlagscheren zum Abscheren von Draht- und/oder Stangenabschnitten, allgemein für Drahtbe- und Verarbeitungsmaschinen, insbesondere als Teil von Ein- bzw. Mehrstufenpressen, wobei der Scherzyklus in den Gesamtablauf der Presse integriert ist.

Eine Vorrichtung zum Abscheren von Stangenabschnitten auf automatischen Mehrstufen-Quertransportpressen ist aus der DE 25 26 151 C3 bekannt. Hierbei schlägt ein am Ende eines kurvengesteuerten Schlaghebels angeordneter Schlagkopf (Hammerbär) mittelbar auf einen Messerschlitten. Nach dem Auftreffen des Hammerbärs springt der Messerschlitten mit einer hohen Anfangsgeschwindigkeit weg (Impulserhaltung). Anschließend wird der Messerschlitten von Schraubenfedern wieder zur Anlage an dem Hammerbär gebracht, damit dieser dann den Messerschlitten zu einer Übergabeposition bringt, von wo der Stangenabschnitt von einem Transportgreifer übernommen wird.

Nachteilig hierbei ist, daß durch Auftreffen des Hammerbärs auf den Messerschlitten ein Rückstoß entsteht, der den Hammerbär vom Messerschlitten zurückprallen läßt und das Kurvengetriebe zum Antrieb des Hammerbärs stark belastet.

Der Erfindung liegt deshalb die Aufgabe zugrunde, den Rückschlag beim Auftreffen des Hammerbärs auf den Messerschlitten zu vermeiden, so daß auf eine Kurvenscheibe nur noch eine begrenzt schädliche Kraft wirkt.

Diese Aufgabe ist bei einem Hammer, insbesondere für eine Schlagschere der im Oberbegriff des Anspruchs 1 genannten Art erfindungsgemäß durch die kennzeichnenden Merkmale des Anspruchs 1 gelöst.

Dadurch, daß die Masse des Masseträgers mit dem Hammerbär bewegt wird, dient der angetriebene Hammerbär nur als Zwischenpuffer zum Werkzeugträger, auf den der Impuls des Masseträgers in der Weise übertragen wird, daß der Impuls von Masseträger und Hammerbär zusammen sowie der Impuls von Werkzeugträger und Hammerbär zusammen gleich groß sind.

Im folgenden wird die Erfindung anhand der durch die Zeichnung schematisch dargestellten Ausführungsform im einzelnen erläutert. Es zeigen:
- Fig.1: die Ausführungsform in Vorderansicht, die gleichzeitig die Ausgangsstellung für die Scherbewegung darstellt
- Fig.2: eine Draufsicht auf die Ausführungsform von Fig. 1
- Fig.3: die Ausführungsform in einer Hammerstellung kurz vor dem Beschleunigen des Hammers in Richtung Scherhebel
- Fig.4: die Ausführungsform in einer Raststellung zum Ausstoßen des Drahtabschnitts aus der Scherbuchse des beweglichen Scherhebels und
- Fig.5: die Ausführungsform in einer Hammerstellung entsprechend Fig. 3, jedoch mit einem alternativen Hammerantrieb

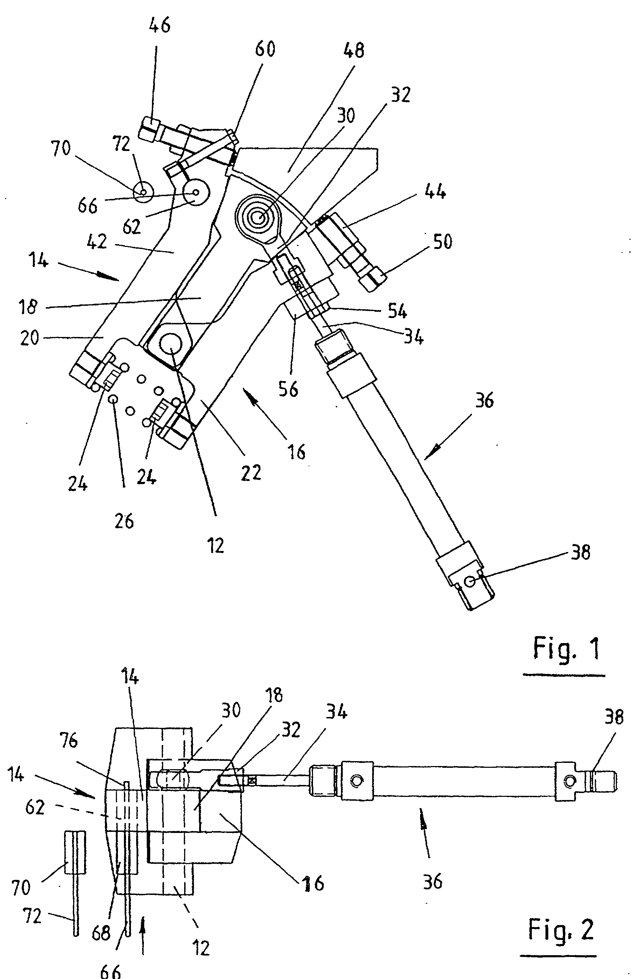

In Fig. 1 und 2 ist ein gestellfest, in einer Ein-oder Mehrstufenpresse gelagerter Bolzen 12 gezeigt, auf dem ein Scherhebel 14, ein Zusatzhebel 16 sowie ein Hammerbär 18 einer Hochgeschwindigkeits-Schlagschere gelagert sind, die Teil der Umformpresse ist. Zwischen den freien Enden der kurzen Arme 20 und 22 der zweiarmig ausgeführten Hebel 14 und 16 ist auf Federbolzen 24 eine Druckfeder 26 vorgespannt angeordnet. Am Hammerbär 18 greift über einen Bolzen 30 ein Gelenkkopf 32 an, der mit der Kolbenstange 34 eines Zylinder-Kolbenaggregats 36 verbunden ist. Das Zylinder-Kolbenaggregat 36 stützt sich über einen Bolzen 38 am Gestell der Umformpresse ab.

Der längere Arm 42 des Scherhebels 14 liegt über eine Stellschraube 46 an einem Gegenlager 48 an, das am Maschinengestell befestigt ist. Ebenso trägt der Zusatzhebel 16 am Ende seines längeren Arms 44 eine Stellschraube 50, die der Stellschraube 46 gegenüber, auf der anderen Seite des Gegenlagers 48 anliegt.

Am Zusatzhebel 16 ist mittels einer Befestigungsschraube 54 eine die Scherarbeit leistende, bewegbare Zusatzmasse 56 am langen Hebelarm 44 befestigt. Im langen Arm 42 des Scherhebels 14 ist mittels einer Klemmschraube 60 eine Scherbuchse 62 befestigt

Die in Fig. 1 gezeigte Stellung des Scherhebels 14 lässt den Transport eines von einem Drahtvorrat zugeführten Drahtes 66 durch eine fluchtend zu der ruhenden Scherbuchse 62 gestellfest angeordnete weitere Scherbuchse 68 in die im Scherhebel 14 angeordnete Scherbuchse 62 zu (Fig. 2).

Der Scherbuchse 68 seitlich benachbart, auf der linken Seite in Fig. 1 und 2, ist eine Ausstoßbuchse 70 gestellfest angeordnet, in welcher ein Ausstoßstößel 72 gleitend geführt ist.

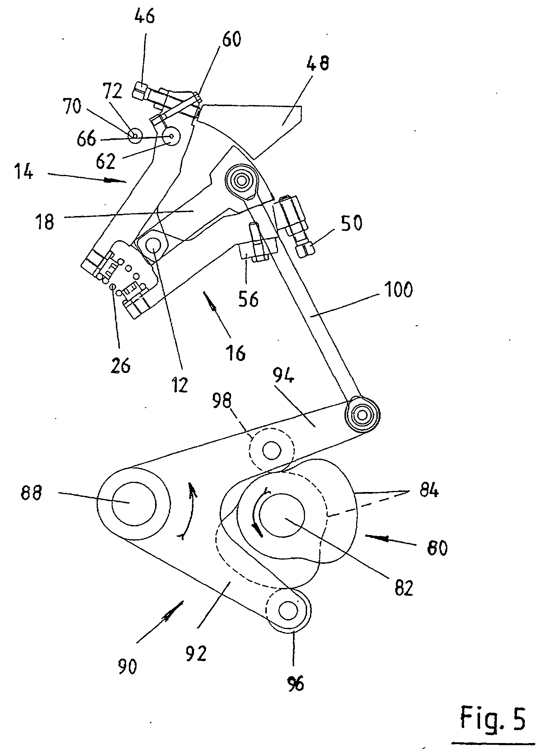

Der in Fig. 5 gezeigte alternative Antrieb des Hammerbärs 18 erfolgt über ein Kurvengetriebe 80. Hierzu ist auf einer getriebenen Welle 82 der Umformpresse eine Doppelkurvenscheibe 84 drehfest angeordnet. In einem gestellfesten Drehlager 88 ist ein gewinkelter Doppelrollenhebel 90 schwenkbar gelagert. An den beiden einarmigen Schenkeln 92 bzw. 94 dieses Hebels 90 ist jeweils eine Rolle 96 bzw. 98 gelagert, die formschlüssig an der Doppelkurve 84 anliegen. Der obere Schenkel 94 des Doppelrollenhebels 90 ist über eine Koppelstange 100 mit dem Hammerbär 18 für dessen Betätigung verbunden.

Anstelle des Kurvengetriebes 80 könnte z.B. auch ein Kurbelgetriebe oder ein Servomotor für den Antrieb des Hammerbärs 18 eingesetzt werden.

Die Wirkungsweise der Hochgeschwindigkeits-Schlagschere ist wie folgt, wenn man von dem Zustand gemäß Fig.1 ausgeht, in dem alle drei Hebel 14, 16 und 18 aneinanderliegen:

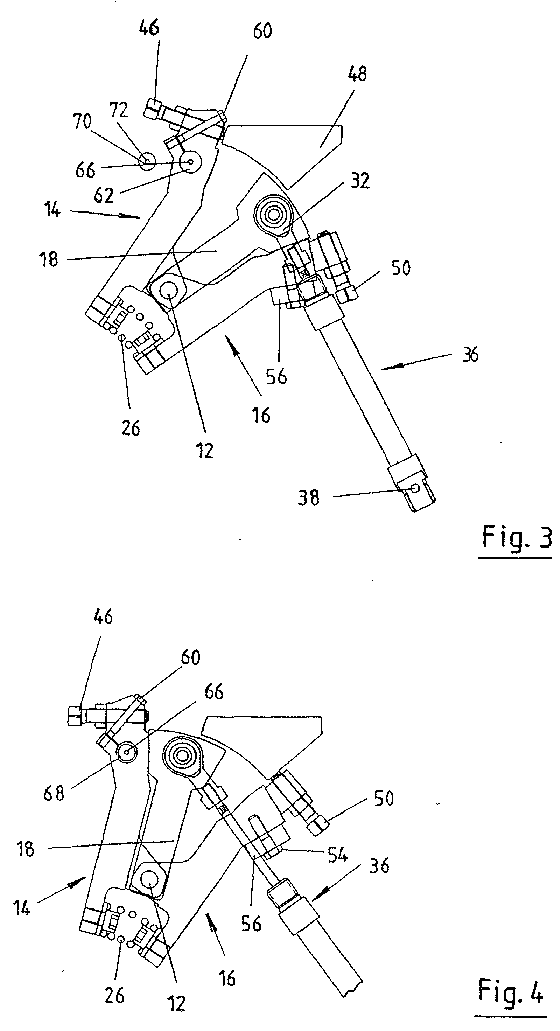

Noch während des Vorschubs des Drahtes 66 durch die fluchtenden Scherbuchsen 68 und 62 wird der Hammerbär 18 durch das Kurvengetriebe 80 bzw. durch kolbenstangenseitiges Beaufschlagen des Zylinder-Kolbenaggregats 36 vom Scherhebel 14 entfernt, und er nimmt dabei den Zusatzhebel 16 mit, bis die in Fig. 3 dargestellte Drehlage des Hammerbärs 18 und des Zusatzhebels 16 erreicht ist. Die Feder 26 wird dabei noch stärker vorgespannt und hält dabei den Scherhebel 14 in Anlage an dem Gegenlager 48.

Nun beginnt das Zylinder-Kolbenaggregat 36 durch kolbenseitige Beaufschlagung mit Druckmedium bzw. das Kurvengetriebe 80 den Hammerbär 18 wieder in die, in Fig. 1 gezeigte Ausgangsstellung zu beschleunigen. Die Feder 26 hält dabei den Zusatzhebel 16 in Anlage am Hammerbär 18. Nach Abschluß des Drahttransports in die Scherbuchse 62, trifft der beschleunigte Hammerbär 18 zusammen mit dem Zusatzhebel 16 und der daran befestigten Zusatzmasse 56 auf den Scherhebel 14 mit einer bestimmten Geschwindigkeit auf. Jetzt bewegt sich der Scherhebel 14 sofort mit derselben Geschwindigkeit wie der Hammerbär 18 in Fig. 1 nach links um den Bolzen 12.

Die im bewegten Zusatzhebel 16 gespeicherte kinetische Energie wird über den Hammerbär 18 auf den Scherhebel 14 übertragen, so daß der Zusatzhebel 16 sofort stehen bleibt (physikalisches Gesetz der Impulserhaltung). Auf den Hammerbär 18 ist keine weitere Reaktionskraft eingeleitet worden, außer der, die der zum Abscheren des Drahtes 66 benötigten Energie entspricht. Diese zusätzliche Energie kann experimentell ermittelt und als bewegte Zusatzmasse 56 bereitgestellt werden.

In Fig. 4 sind Hammerbär 18 und Scherhebel 14 in einer Umkehrraststellung gezeigt. Während ihres Verharrens darin wird das von den Scherbuchsen 62 und 68 abgescherte Drahtstück 76 des endlosen Drahtes 66 mittels des Ausstoßstößels 72, der in der Ausstoßbuchse 70 gleitend geführt ist, in bekannter Weise zur Weiterbearbeitung in der Umformpresse aus der Scherbuchse 62 ausgestoßen. Die Umkehrstellung des Scherhebels 14 zum Ausstoßen des Drahtstücks 76 wurde durch weitere Beaufschlagung des Zylinder-Kolbenaggregats 36 bzw. durch das Kurvengetriebe 80 erreicht, dabei wurde der Scherhebel 14 entgegen der Kraft der Feder 26 mittels des Hammerbärs 18 vom Gegenlager 48 wegbewegt.

Nachdem der Ausstoßstößel 72 wieder aus der Scherbuchse 62 des Scherhebels 14 herausbewegt wurde, werden der Hammerbär 18, Scherhebel 14 und der Zusatzhebel 16 durch kolbenstangenseitiges Beaufschlagen des Zylinder-Kolbenaggregats 36 bzw. durch das Kurvengetriebe 80 wieder in die, in Fig. 3 gezeigte Drehlage gebracht, wobei die oben beschriebenen Bewegungen umgekehrt ablaufen, d. h. bei Aufprall des Hammerbärs 18 auf den stehenden Zusatzhebel 16 nimmt dieser den Impuls von Hammerbär 18 und Scherhebel 14 auf und der Hammerbär 18 bewegt sich ohne Verzögerung mit dem Zusatzhebel 16 weiter.

Die erfindungswesentliche Anordnung des Hammerbärs 18 zwischen dem Scherhebel 14 und einem Masseträger, dem Zusatzhebel 16, kann, wenn bei diesem einmal von der Zusatzmasse 56 abgesehen wird, mit der physikalischen Anordnung dreier idealer Kugelpendel in einer Ebene verglichen werden, von denen im Ruhrzustand zwei seitliche Kugeln gleicher Masse eine mittlere Kugel beliebiger Masse punktförmig berühren. Werden hierbei die mittlere und eine seitliche Kugel gemeinsam von der anderen seitlichen Kugel entfernt (durch Pendelauslenkung) und anschließend zusammen losgelassen, dann bleibt die nachlaufende seitliche Kugel stehen, wenn die mittlere Kugel auf die bisher ruhende seitliche Kugel stößt und diese mitnimmt. Dabei gilt der Impuls-und der Energieerhaltungssatz, falls keine Kräfte außer der Schwerkraft wirksam sind. D.h. insbesondere, daß die mittlere Kugel den Impuls der nachlaufenden seitlichen Kugel auf die weggestoßene seitliche Kugel überträgt und gleichzeitig ihren eigenen Impuls unverändert behält, sodaß keine vollständige Impulsübertragung stattfindet wie bei derselben Kugelpendel-Anordnung, wenn nur die eine seitliche Kugel von der mittleren und der anderen seitlichen Kugel, die beide ruhen, allein entfernt und losgelassen wird.

Das Aggregat 36 bzw. das Getriebe 80 wird als Antrieb des Hammerbärs 18 benötigt, um ein maschinensynchrones Arbeiten zu ermöglichen, sowie eine gewünschte Schergeschwindigkeit vorgeben zu können. Auf die Masse des Hammerbärs 18 kommt es nicht wesentlich an.

### BEZUGSZAHLENLISTE

- 10: =
- 12: = Bolzen
- 14: = Scherhebel
- 16: = Zusatzhebel
- 18: = Hammerbär
- 20: = Kurzer Arm des Scherhebels 14
- 22: = Kurzer Arm des .... hebels 16
- 24: = Federbolzen
- 26: = Druckfeder
- 28: =
- 30: = Bolzen
- 32: = Gelenkkopf
- 34: = Kolbenstange
- 36: = Zylinder-Kolbenaggregat
- 38: = Bolzen
- 40: =
- 42: = Langer Arm des Scherhebels 14
- 44: = Langer Arm des hebels 16
- 46: = Stellschraube
- 48: = Gegenlager
- 50: = Stellschraube
- 52: =
- 54: = Befestigungsschraube
- 56: = Zusatzmasse
- 58: =
- 60: = Klemmschraube
- 62: = Scherbuchse bewegbar
- 64: =
- 66: = Draht
- 68: = Scherbuchse gestellfest
- 70: = Ausstoßbuchse
- 72: = Ausstoßstößel
- 74: =
- 76: = abgeschertes Drahtstück Werkstück-Rohling
- 78: =
- 80: = Kurvengetriebe
- 82: = Welle
- 84: = Doppelkurvenscheibe
- 86: =
- 88: = Drehlager
- 90: = Doppelrollenhebel, gewinkelt
- 92: = 1. Schenkel des Hebels 90
- 94: = 2. Schenkel des Hebels 90
- 96: = Rolle
- 98: = Rolle
- 100: = Koppelstange
- 102: =
- 104: =
- 106: =
- 108: =
- 110: =
- 112: =
- 114: =
- 116: =
- 118: =
- 120: =
- 122: =
- 124: =
- 126: =
- 128: =
- 130: =
- 132: =
- 134: =
- 136: =
- 138: =

## Patentansprüche

1. Hammer, insbesondere für Schlagscheren zum Abscheren von Draht- und/oder Stangenabschnitten, mit einem auf Schlaggeschwindigkeit antreibbaren Hammerbär (18) und einem von diesem beaufschlagbaren Werkzeugträger, dadurch **gekennzeichnet**, daß auf der dem Werkzeugträger (14) abgewandten Rückseite des Hammerbärs (18) ein separater Masseträger (16) angeordnet ist, der am Hammerbär (18) anliegend diesem bei dessen Bewegung gegen den Werkzeugträger (14) folgt, bis der Hammerbär (18) am Werkzeugträger (14) anschlägt und dabei sein Antrieb unterbrochen wird, und gleichzeitig stehenbleibt, und welcher Masseträger (16) mittels des in seine Ausgangslage zurückbewegten Hammerbärs (18) in die eigene Ausgangslage mitgenommen wird ab dem Augenblick, in dem der wieder angetriebene Hammerbär (18) am Masseträger (16) anschlägt und der in seine Ausgangslage zurückbewegte Werkzeugträger (14) gleichzeitig stehenbleibt; und daß die bewegte Masse des Masseträgers (16) um den Betrag 2A/v² größer ist als die bewegte Masse des Werkzeugträgers (14), wobei A und v die vom Werkzeugträger (14) zu leistende Abscherarbeit bzw. dessen Arbeitsgeschwindigkeit sind.

2. Hammer nach Anspruch 1, dessen beaufschlagter Werkzeugträger mittels einer Rückstellfeder in seine Ausgangslage zurückbewegbar ist, dadurch **gekennzeichnet,** daß der Werkzeugträger und der Masseträger als zweiarmige Hebel (14, 16) mit gemeinsamer Drehachse (12) ausgebildet sind, auf welcher der Hammerbär (18) zwischen den beiden Hebeln (14, 16) schwenkbar gelagert ist; wobei die beiden längeren Hebelarme das Werkzeug (62) bzw. eine auswechselbare Zusatzmasse (56) tragen und zwischen den beiden kürzeren Hebelarmen die Rückstellfeder (26) eingespannt ist; und mit je einem Anschlag (46, 50) versehen sind, die mit einem ortsfesten Gegenanschlag (48) zusammenwirken, der im Schwenksektor des Hammerbärs (18) angeordnet ist.

3. Hammer nach Anspruch 1 oder 2, dadurch gekennzeichnet, daß der Hammerbär (18) mittels einer schwenkbar an diesem angelenkten Schub- und Zugstange (34; 100) antreibbar ist.

4. Hammer nach Anspruch 3, dadurch gekennzeichnet, daß die Schub- und Zugstange die Kolbenstange (34) eines Zylinder-Kolben-Aggregats (36) ist.

5. Hammer nach Anspruch 3, mit einem formschlüssigen Kurvengetriebe (80), dessen zwei Rollen (96, 98) an einem Winkelhebel (90) gelagert sind, dadurch **gekennzeichnet** daß die Schub- und Zugstange (100) an einem (94) der beiden einarmigen Hebelschenkel (92, 94) angelenkt ist.

6. Verwendung des Hammers nach einem der Ansprüche 1 bis 5 bei Schlagscheren mit einer bewegbaren (62) und einer ortsfesten (68) Scherbuchse, dadurch **gekennzeichnet**, daß der Werkzeugträger (14) die bewegbare Scherbuchse (62) aufnimmt und zwischen einer Ausgangslage, in welcher die beiden Scherbuchsen (62, 68) längs des zu schneidenden Materials (66) fluchten, und einer Endlage bewegbar ist, in welcher die bewegbare Scherbuchse (62) längs des abgescherten Materialabschnitts (76) mit einer ortsfesten Ausstoßbuchse (70) fluchtet, in der ein Ausstoßstößel (72) geführt ist.

## Claims

1. Hammer, specifically intended for impact cutters for cutting sections of wire and/or rods, with a striker (18) that can be driven at impact speed, and a tool carrier on which the striker impacts, **characterized** by the features that on the back side of the striker (18), facing away from the tool carrier (14), a separate mass carrier (16) is located; this mass carrier stays in contact with the striker (18) while following its movement towards the tool carrier (14), until the striker (18) strikes the tool carrier (14) - which interrupts the action of its drive system - and stops at the same time; by means of the striker (18) that is being moved back to its starting position, said mass carrier (16) is taken along back to its own starting position, beginning at that moment when the striker (18), its drive system resuming operation again, strikes the mass carrier (16), and the tool carrier (14) that has been moved back to its starting position stops at the same time; and that the moving mass of the mass carrier (16) is larger by the amount 2A/v² than the moving mass of the tool carrier (14), where A is the cutting work and v the operating speed to be provided by the tool carrier (14).

2. Hammer as in Claim 1, whose driven tool carrier can be moved back to its starting position by means of a return spring, **characterized** by the features that the tool carrier and the mass carrier are designed as two-armed levers (14, 16) with a common pivot point (12) on which the striker (18) pivots between the two levers (14, 16); that the two longer arms of the levers carry the tool (62) and an exchangeable supplementary mass (56), respectively, and that the return spring (26) is installed between the two shorter arms of the levers; and that they are each equipped with a stop (46, 50) which acts in conjunction with a fixed counterstop (48) that is located in the pivoting sector of the striker (18).

3. Hammer as in Claim 1 or 2, **characterized** by the feature that the striker (18) can be driven by means of a push and pull rod (34; 100) linked to it by means of a pivot joint.

4. Hammer as in Claim 3, **characterized** by the feature that the push and pull rod is the piston rod (34) of a cylinder-and-piston assembly (36).

5. Hammer as in Claim 3, with a contacting cam gear (80) whose two rollers (96, 98) are attached to an angled lever (90), **characterized** by the feature that the push and pull rod (100) is linked to one (94) of the two arms (92, 94) of the lever.

6. Use of the hammer as in one of the Claims 1 to 5 with impact cutters having one movable (62) and one fixed (68) cutting sleeve, **characterized** by the feature that the tool carrier (14) accepts the movable cutting sleeve (62) and can be moved between a starting position in which the two cutting sleeves (62, 68) line up along the material (66) to be cut, and an end position in which the movable cutting sleeve (62) in alignment with the cut section of material (76) lines up with a fixed ejection sleeve (70) guiding an ejection ram (72).

## Revendications

1. Marteau, en particulier pour cisailles guillotines pour le cisaillement de morceaux de fil et/ou de barre, comportant un mouton (18) pouvant être entraîné à la vitesse de frappe et un porte-outil sur lequel peut agir celui-ci, caractérisé par le fait que sur le côté arrière, opposé au porte-outil (14), du mouton (18) est placé un support de masse séparé (16) qui, appuyé contre le mouton (18), suit celui-ci lors de son mouvement vers le porte-outil (14) jusqu'à ce que le mouton (18) bute contre le porte-outil (14) et que son entraînement soit alors interrompu, et en même temps s'arrête, et lequel support de masse (16) est, au moyen du mouton (18) ramené dans sa position initiale, entraîné jusqu'à sa position initiale propre à partir de l'instant où le mouton (18) de nouveau entraîné bute contre le support de masse (16) et en même temps, le porte-outil (14) ramené dans sa position initiale s'arrête, et que la masse mise en mouvement du support de masse (16) est supérieure de 2A/v2 à la masse mise en mouvement du porte-outil (14), A étant le travail de cisaillement à accomplir par le porte-outil (14) et v la vitesse de travail de celui-ci.

2. Marteau selon la revendication 1, dont le porte-outil attaqué peut être ramené dans sa position initiale au moyen d'un ressort de rappel, caractérisé par le fait que le porte-outil et le support de masse sont constitués de leviers à deux bras (14, 16) ayant un axe de rotation commun (12) sur lequel le mouton (18) est monté basculant entre les deux leviers (14, 16), les deux bras de levier longs portant respectivement l'outil (62) et une masse supplémentaire changeable (56), le ressort de rappel (26) étant serré entre les deux bras de levier courts, et les bras de levier longs étant pourvus chacun d'une butée (46, 50), les deux butées coopérant avec une contre-butée fixe (48) qui est placés dans le secteur de basculement du mouton (18).

3. Marteau selon l'une des revendications 1 et 2, caractérisé par le fait que le mouton (18) peut être entraîné au moyen d'une bielle (34 ; 100) articulée à celui-ci.

4. Marteau selon la revendication 3, caractérisé par le fait que la bielle est la tige de piston (34) d'un vérin (36).

5. Marteau selon la revendication 3, comportant un mécanisme à cames à coopération de forme (80) dont les deux galets (96, 98) sont montés sur un levier coudé (90), caractérisé par le fait que la bielle (100) est articulée à une (94) des deux branches à un seul bras (92, 94) du levier.

6. Utilisation du marteau selon l'une des revendications 1 à 5 sur des cisailles guillotines comportant une douille mobile de cisaillement (62) et une douille fixe de cisaillement (68), caractérisé par le fait que le porte-outil (14) reçoit la douille mobile de cisaillement (62) et est mobile entre une position initiale dans laquelle les deux douilles de cisaillement (62, 68) sont alignées le long de la matière à couper (66) et une position finale dans laquelle la douille mobile de cisaillement (62) est alignée le long du morceau de matière cisaillé (76) avec une douille fixe d'éjection (70) dans laquelle est monté un poussoir d'éjection (72).
